# DEMANDE DE BREVET EUROPEEN

(11) **EP 1 291 834 A1**
(43) Date de publication de la demande: **12.03.2003**
(21) Numéro de dépôt: 02292204.1
(22) Date de dépôt: 09.09.2002
(51) Int. Cl.: G09F 17/00, G09F 15/00

(54) **Dispositif de présentation d'un support d'informations équipé d'au moins un éclairage**

(30) Priorité: 07.09.2001 FR 0111582
(71) Demandeur: Woodsys, 33600 Pessac (FR)
(72) Inventeur: Aschenbroich, Marc, 33610 Cestas (FR)
(74) Mandataire: Kohn, Philippe

(57) **Abrégé**

- L'objet de l'invention est un dispositif de présentation d'un support d'informations, caractérisé en ce qu'il comprend une potence (16) équipée de moyens d'éclairage, un support (20) de présentation d'informations formant un manchon monté autour de la dite potence et présentant deux faces avec les moyens d'éclairage diffusant entre ces deux faces ainsi que des moyens (18) de tension de ce manchon sur la potence.

## Description

La présente invention concerne un dispositif de présentation d'un support d'informations, équipé d'au moins un éclairage.

Les supports d'informations doivent suivre au plus près les évènements auxquels ils se rapportent. Ceci nécessite des moyens de réalisation de ces supports qui sont rapidement exécutables, à des coûts compatibles avec des durées de présentation limitées, qui sont souples tant pour les modifications que pour la réalisation et les modifications. Les techniques d'impression le permettent aisément.

Il convient alors de disposer de moyens adaptés pour présenter ces supports ainsi réalisés.

Ces moyens doivent permettre une pose et une dépose très rapides, donc mobilisant des systèmes simples. Néanmoins, il faut que ces systèmes restent parfaitement sécuritaires.

C'est ainsi qu'un agencement bien connu consiste à prévoir une potence horizontale rapportée sur un mur ou sur un mât. Dans la partie située sous cette potence, il est prévu des moyens d'accrochage d'un support d'informations, du type feuille en matière plastique, toile ou bâche. De tels moyens d'accrochage peuvent être une tringle, des crochets ou tout autre moyen. En partie inférieure, un contrepoids permet de tendre le support d'informations et de le maintenir vertical en cas de vent.

Néanmoins, ceci n'est pas satisfaisant car le contrepoids doit être réduit pour ne pas engendrer de danger en cas de décrochage ou d'arrachement dû à une dégradation prématurée du support d'affichage et du fait de ce poids réduit, le support d'affichage est agité même par un faible vent si bien que sa lecture en est grandement affectée. La communication qui s'en suit reste non satisfaisante.

De plus, de tels dispositifs de présentation ne sont pas toujours porteurs d'un support d'informations et il est nécessaire que ces dispositifs restent intégrés au milieu dans lequel ils sont implantés, sans dépareiller. Une potence isolée, supportée par un mur ou un mât avec des moyens d'accrochage n'est pas particulièrement esthétique.

Dans ce but, il est possible de lui donner d'autres fonctions et des caractéristiques esthétiques. C'est un des buts de la présente invention de proposer un dispositif de présentation multifonctions et dont les caractéristiques esthétiques ont également un rôle technique.

Par ailleurs, les supports de présentation d'informations sont améliorés lorsqu'ils disposent d'un éclairage pour une bonne mise en valeur par faible luminosité. Cet éclairage devient une nécessité pour une lecture la nuit et c'est d'ailleurs à ce moment là qu'il capte le plus l'attention des passants.

On sait que dans ce cas, l'installation électrique reste un autre problème car le raccordement sur le réseau public engage des travaux et des interventions complexes et coûteuses. Pour certaines applications, une solution consiste à prévoir des agencements autonomes avec des moyens de stockage d'énergie et des panneaux pour capter l'énergie solaire, qui assurent le chargement de ces moyens de stockage d'énergie. Un tel agencement est notamment proposé dans la demande de brevet français N°00.03541 et N°00.10654 au nom du même demandeur.

Néanmoins, il faut optimiser l'éclairage du support d'affichage pour que la consommation reste compatible avec les capacités de stockage elles-mêmes limitées par l'encombrement au sol ou de toutes les façons pour une réduction de la consommation d'énergie.

Dans le cas d'un éclairage direct du support d'informations en feuille, l'énergie nécessaire est importante et la consommation est incompatible avec une source autonome sauf à réduire considérablement la durée d'éclairage. En effet, dans ce cas d'éclairage direct par réflexion, le support d'informations est éclairé mais une grande partie des photons est également dissipée autour du support limitant ainsi le différentiel entre la luminosité du support éclairé et celle de l'environnement immédiat.

C'est là un autre objet de la présente invention, celui de proposer un éclairage adapté et économique compatible avec une alimentation autonome mais contribuant aussi aux économies d'énergie.

Le dispositif selon la présente invention est maintenant décrit en détail selon un mode de réalisation particulier, non limitatif en regard des dessins annexés sur lesquels les différentes figures représentent
- figure 1, une vue en perspective d'un dispositif de présentation d'un support d'informations, orienté verticalement, selon la présente invention dans le cas d'un agencement sur un mât,
- figure 2, une vue détaillée en élévation latérale avec un bras principal et un bras tendeur, avec le support d'informations monté,
- figure 3, une vue d'une variante avec un capot de fixation, de protection et antivol du support d'informations,
- figure 4, une vue d'une variante avec un bras tendeur à éclairage, réglable et amovible,
- figure 5, une variante utilisant un support horizontal d'informations, et
- figure 6, une variante avec une motorisation permettant l'enroulement du support d'informations.

On entend pour la suite de la description comme support d'informations, tout support en feuille du type matière plastique, toile quelle que soit la fibre et le tissage, bâche en matière plastique pleine, perforée ou micro perforée ou encore feuille cellulosique traitée par un produit hydrophobe. Le choix reste à la portée de l'homme de l'art en fonction du type d'utilisation ponctuelle ou résidente de l'information mentionnée, du lieu de mise en service suivant qu'il est abrité ou à l'air libre.

Compte tenu des moyens d'éclairage utilisés comme indiqué plus avant dans la description, il est nécessaire que ces supports laissent diffuser la lumière.

Quant à l'information portée sur le support, elle peut être de quelque nature que ce soit publicitaire, évènementielle, culturelle, informative, ponctuelle ou de longue durée.

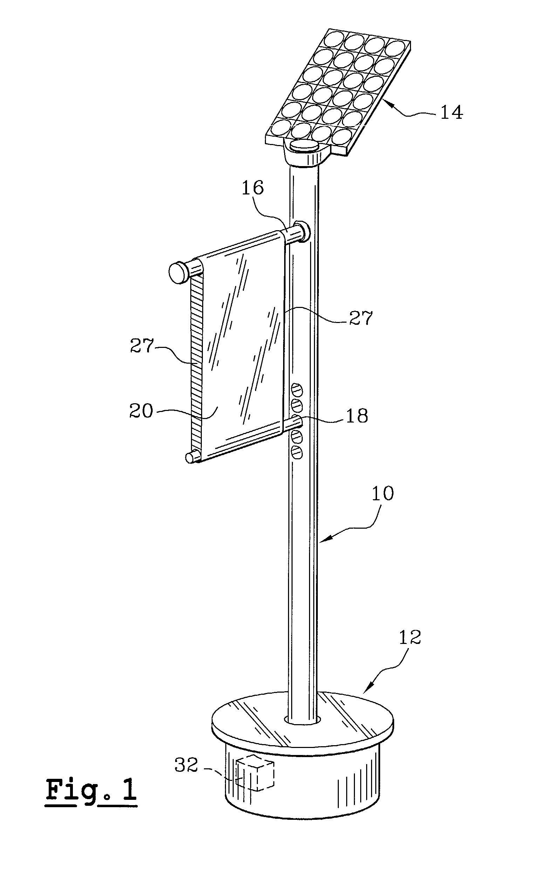

Sur la figure 1, on a représenté une réalisation sur un mât 10 implanté dans un socle 12 contenant des moyens de stockage de l'électricité, non représentés. De tels moyens par leur poids assurent la stabilité de l'édifice en plus de la fonction d'alimentation électrique.

Il est aussi prévu de façon connue des moyens 14 de captage et de transformation de l'énergie solaire en électricité.

Le dispositif de présentation d'informations comprend une potence 16 rapportée perpendiculairement au mât, des moyens 18 de tension et un support 20 d'informations. Dans l'agencement retenu comme exemple, la potence est en partie supérieure tandis que les moyens de tension sont disposés en partie inférieure, dans un même plan vertical, sensiblement parallèle à une génératrice du mât.

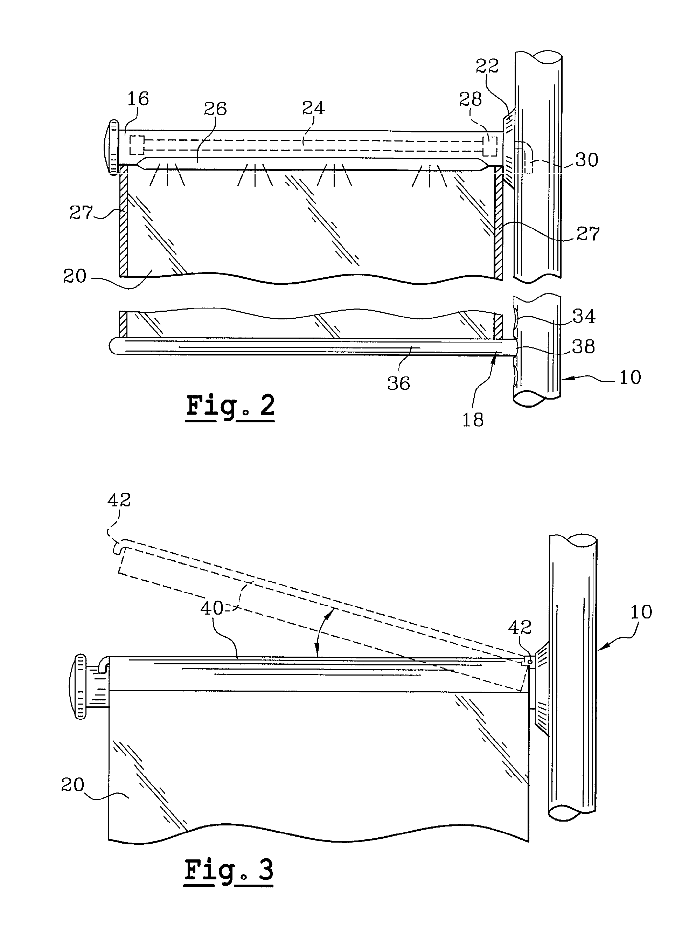

La potence 16 est tubulaire, à section circulaire dans le mode simplifié de réalisation de la figure 1 et sur la figure 2 qui la montre en détail.

Cette potence comprend une embase 22 de liaison permettant la reprise des efforts et la communication du volume intérieur de la potence avec le volume intérieur du mât.

L'intérieur de cette potence est équipé de moyens 24 d'éclairage, orientés vers le bas, c'est-à-dire vers les moyens tendeurs. Ces moyens sont du type à faible consommation tels qu'une lampe à décharge ou une lampe compacte.

Un capot diffuseur 26 transparent protège l'accès à la source de lumière et diffuse le faisceau de lumière.

Un cache latéral 27 est éventuellement prévu au niveau d'au moins un des bords latéraux du support 20 d'informations, et de préférence des deux, de manière à limiter les pertes de luminosités, et susceptible de servir de support d'informations.

Les connecteurs 28 électriques et les liaisons 30 filaires sont ceux existants dans le commerce puisqu'ils ne présentent pas de spécificité et qu'ils doivent être homologués. Les liaisons filaires sont reliées à une centrale 32 de pilotage de type connu avec un programmateur et des organes de sécurité, logée dans le socle ou le mât et elle-même connectée aux moyens de stockage de l'énergie électrique.

Les moyens 18 tendeurs sont également rapportés perpendiculairement au mât 10. De préférence, ils sont réglables et coopèrent avec des moyens 34 de réception ménagés dans le mât 10.

Ces moyens tendeurs comprennent dans le mode de réalisation des figures 1 et 2, un bras 36 dont l'une des extrémités comprend des moyens 38 d'accrochage prévus pour coopérer avec les moyens 34 de réception.

Le diamètre de ce bras peut être plus petit que celui de la potence.

Le support 20 d'informations quant à lui est particulier puisque c'est un manchon déformable ou préformé, les deux extrémités de la feuille qui le constitue étant reliées ou comportant des moyens pour les relier.

La mise en place est donc extrêmement aisée puisqu'il suffit d'enfiler le manchon par dessus la potence puis sous le bras 36.

Le manchon se trouve alors tendu entre la potence et le bras.

Avantageusement, le cache latéral 27 est en matériau rigide et fixé entre la potence 16 et le bras 36 de manière à rigidifier l'ensemble.

Du fait du différentiel de diamètre, le support présente des faces très légèrement inclinées vers le bas pour augmenter la densité lumineuse au fur et à mesure de l'éloignement de la source et facilitant également la lecture.

Lorsque la luminosité est trop faible, la centrale de pilotage déclenche la mise en service de l'éclairage 24. Celui-ci se trouve disposé entre les deux faces tendues du support 20 d'informations, ce qui permet un rétro-éclairage tout à fait satisfaisant.

D'une part les pertes sont extrêmement limitées et la puissance nécessaire pour autoriser la lecture des informations imprimées est faible.

Afin de perfectionner le mode de réalisation principal, il est possible de prévoir un capot 40 de protection et antivol.

Un tel capot est avantageusement monté articulé pour prendre deux positions l'une ouverte représentée en trait discontinu pour permettre la mise en place du support en forme de manchon sur la potence et l'autre en trait plein, plaqué contre l'affiche elle-même reposant sur la potence.

L'affiche est ainsi immobilisée et protégée des souillures sur ses génératrices exposées en partie supérieure. De plus, des moyens 42 de verrouillage permettent de générer une fonction antivol.

Selon les cas, le capot 40 de protection est disposé indifféremment au niveau de la potence 16 et/ou du bras 36.

Selon une autre caractéristique, ce capot 40 de protection est prolongé par deux parois latérales susceptibles de venir de part et d'autre de la potence ou du bras, de manière à conférer à l'ensemble une meilleure esthétique, à assurer une protection plus importante du support 20 d'informations, et éventuellement susceptibles de servir de support d'informations.

Selon une autre variante, il est possible d'inverser la position de la potence et du bras en disposant la potence en bas et le bras en haut sans changer l'invention.

De même, les diamètres peuvent être modifiés.

Le bras 36 du mode de réalisation de la figure 2 peut être également une potence 16-1 identique à la potence 16, avec également un éclairage 24-1. Il suffit d'adapter les capacités d'alimentation électrique.

L'éclairage est alors d'une qualité encore meilleure et trouve application dans certaines circonstances, notamment si le support laisse diffuser peu de lumière à cause d'une surcharge d'informations imprimées.

Selon un autre perfectionnement, si le bras est une potence, il est aussi possible soit de placer un réflecteur amovible ou de prévoir une embase rotative en sorte de pouvoir diffuser la lumière vers le bas lorsque aucun support d'informations n'est mis en place. Le mât fait office d'éclairage public avec une source d'énergie renouvelable dans le cas où elle est prévue.

En fonction des dimensions, il est aussi possible d'adjoindre tout système de tension avec des moyens de rappel élastique interposés entre la potence et le bras ou entre les deux potences, ou encore des contrepoids masqués dans le mât ou apparents.

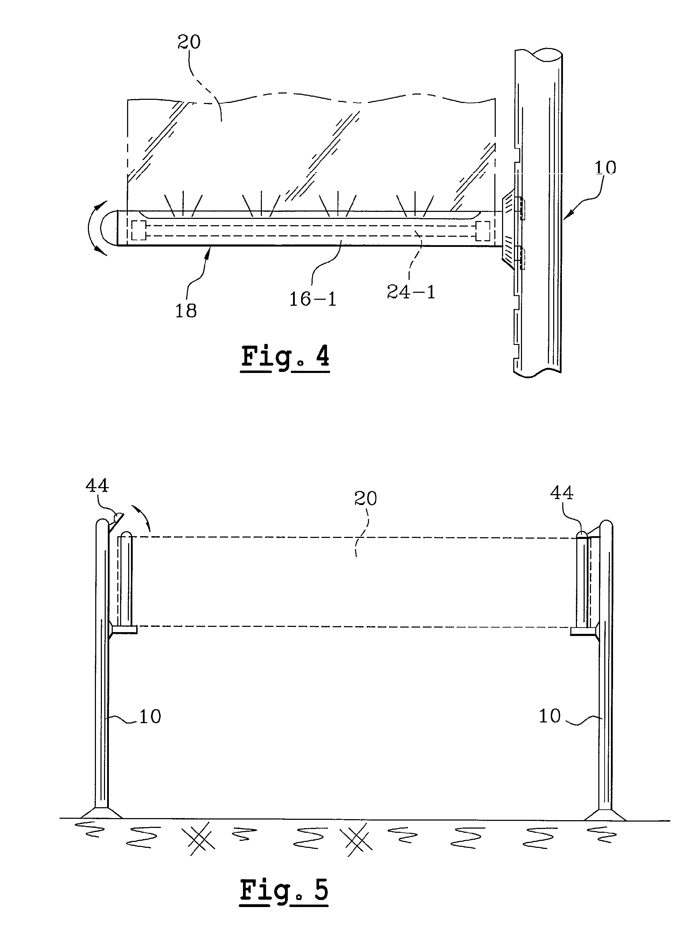

Sur la figure 5, il est prévu un agencement avec un support d'informations orienté horizontalement.

Dans ce cas, les éléments sont les mêmes avec de préférence, deux potences solidaires chacune d'un mât. Les potences sont orientées verticalement. Entre ces deux potences le support 20 est tendu.

Compte tenu de la direction des efforts, il est utile de prévoir des moyens 44 complémentaires de retenue du support d'informations et de protection.

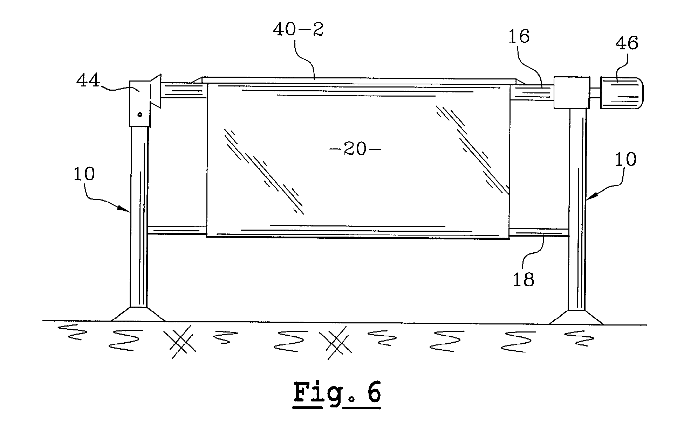

La figure 6 présente une variante à enroulement. Dans ce cas, des moyens 46 moteurs entraînent en rotation la potence 16 qui est montée à rotation par rapport au mât 10 qui la porte perpendiculairement. En variante, le moteur peut être remplacé par un moyen manuel de rotation, par exemple une manivelle.

En fonction des contraintes mécaniques, un second mât, équipé de moyens 44 complémentaires de retenue, peut être installé.

Il est ainsi possible de réaliser un enroulement puisque le capot 40-2 assure l'immobilisation du support 20 d'informations sur la potence 16.

Les moyens 18 de tension doivent également être mobiles. Il peut s'agir d'un contrepoids, d'un bras coulissant ou de tout autre moyen.

Les autres éléments nécessaires à l'invention subsistent, à savoir l'éclairage interne à partir d'au moins une source intégrée au moins à la potence et le support d'informations en forme de manchon déformable.

Les modes de réalisation l'ont été à partir d'une source autonome et d'un mât mais le dispositif selon l'invention peut être éclairé à partir du réseau public d'alimentation électrique lorsque cela est possible et ne perturbe pas l'aménagement. bans ce cas, la puissance électrique peut être importante mais il est aussi intéressant de diminuer la consommation en optimisant l'éclairage ainsi que le permet le dispositif selon l'invention.

Le montage présenté comprend des mâts sur lesquels sont rapportés les potences et les moyens tendeurs mais il est tout à fait possible de placer les potences et les moyens tendeurs sensiblement perpendiculairement à un mur ou à tout autre structure ou encore sur des câbles.

Le fait de disposer d'un manchon permet une mise en place très rapide sur la potence et les moyens tendeurs. Quant au capot, il présente un grand intérêt pour la fixation de l'affiche et pour interdire ainsi sa rotation et son glissement mais aussi pour sa la protection de la partie supérieure. Le mode de réalisation avec une articulation peut être remplacé par un montage avec un encliquetage ou par tout autre montage notamment à vis.

En intérieur, dans un lieu clos, les moyens tendeurs peuvent être simplement des contrepoids de faible poids.

Selon une autre variante également le support peut-être réalisé à partir d'une bande formant manchon sur laquelle est rapportée, par tout moyen, une feuille qui est imprimée. La bande peut ainsi être réutilisée tandis que les feuilles seules sont changées. Il n'en demeure pas moins que la bande et les feuilles qui lui sont superposées doivent laisser passer la lumière et faire apparaître les informations portées, par rétro-éclairage.

## Revendications

1. Dispositif de présentation d'un support d'informations **caractérisé en ce qu'**il comprend une potence (16) équipée de moyens (24) d'éclairage, un support (20) de présentation d'informations formant un manchon monté autour de la dite potence et présentant deux faces avec les moyens d'éclairage diffusant entre ces deux faces ainsi que des moyens (18) de tension de ce manchon sur la potence.

2. Dispositif de présentation selon la revendication 1, **caractérisé en ce qu'**il comprend un capot (40), de fixation et de protection du support de présentation disposé sur la potence.

3. Dispositif de présentation selon la revendication 2, **caractérisé en ce que** le capot (40) est amovible.

4. Dispositif de présentation selon l'une quelconque des revendications précédentes, **caractérisé en ce que** les moyens (18) de tension comprennent un bras (36) avec des moyens (34,38) de réglage de la tension.

5. Dispositif de présentation selon la revendication 4, **caractérisé en ce que** le bras (36) comprend des moyens (24-1) d'éclairage.

6. Dispositif de présentation selon l'une quelconque des revendications précédentes, **caractérisé en ce que** le bras (36) est disposé au-dessous de la potence (16) et **en ce que** ledit bras est monté rotatif en sorte de permettre un positionnement adapté de l'éclairage.

7. Dispositif de présentation selon l'une quelconque des revendications précédentes, **caractérisé en ce que** les faces du support d'informations, situées entre la potence (16) et les moyens (18) de tension, sont inclinées l'une par rapport à l'autre.

8. Dispositif de présentation selon l'une quelconque des revendications précédentes, **caractérisé en ce que** le support (20) d'informations est disposé verticalement et **en ce que** la potence (16) est munie de moyens (46) moteurs d'entraînement en rotation de ladite potence pour permettre l'enroulement du support (20) d'informations.

9. Dispositif de présentation selon l'une quelconque des revendications précédentes, **caractérisé en ce qu'**il comprend des moyens de stockage de l'énergie électrique et des moyens (14) de captage et de transformation de l'énergie solaire en énergie électrique.

10. Dispositif de présentation selon l'une quelconque des revendications précédentes, **caractérisé en ce qu'**il comprend au moins un cache latéral (27) disposé au niveau d'au moins un des bords latéraux du support (20) d'informations.
